# EUROPEAN PATENT APPLICATION

(11) **EP 4 759 648 A1**
(43) Date of publication of application: **17.06.2026**
(21) Application number: 25218910.5
(22) Date of filing: 27.11.2025
(51) Int. Cl.: B60T 8/174, B60T 8/1755

(54) **A METHOD, APPARATUS, CONTROLLER, VEHICLE AND PROGRAM FOR CALIBRATING A VEHICLE STABILITY SYSTEM**

(30) Priority: 11.12.2024 CN 202411822696
(71) Applicant: Robert Bosch GmbH, 70442 Stuttgart (DE)
(72) Inventor: LI, Yuxiao, Shanghai, 200335 (CN); LIU, Xinzeyu, Shanghai, 200335 (CN); LI, Longyuan, Shanghai, 200335 (CN); LU, Xiaonan, Shanghai, 200335 (CN)

(57) **Abstract**

Examples of the present disclosure relate to a method, apparatus, controller, vehicle, and computer program product for calibrating a vehicle stability system of a vehicle. The method comprises acquiring vehicle model data of the vehicle. The method further comprises acquiring braking system data of a braking system of the vehicle. The method further comprises using a generative neural network model to generate parameters for calibrating the vehicle stability system based on the vehicle model data and the braking system data. The method according to examples of the present disclosure can use a generative neural network model based on vehicle-related data to efficiently generate parameters for calibrating the vehicle stability system of the vehicle, thereby improving the accuracy and efficiency of calibrating the vehicle stability system of the vehicle and reducing the cost of calibrating the vehicle stability system.

## Description

### Technical Field

Examples of the present disclosure relate to the field of vehicles, and in particular to a method, apparatus, controller, vehicle, and computer program product for calibrating a vehicle stability system of a vehicle.

### Background

As vehicle models become more diverse, vehicle stability systems of vehicles are also becoming increasingly diverse. The vehicle stability system of the vehicle is used to control the braking system of the vehicle when the vehicle is in a critical situation so as to enable it to realize braking functions such as anti-lock and anti-skid braking, thereby ensuring the safety of the vehicle. Typically, for new vehicles, the vehicle stability system is designed with a set of default parameters. However, during the actual operation of the vehicle, the vehicle stability system under this set of default parameters may not be able to accurately and stably control the braking system of the new vehicle. Therefore, the parameters of the vehicle stability system of the new vehicle need to be calibrated or recalibrated to ensure the safety of the vehicle. Due to the large number of parameters of the vehicle stability system, highly experienced engineers are often required to perform this calibration or recalibration.

### Summary of the Invention

Examples of the present disclosure provide a method, apparatus, controller, vehicle, and computer program product for calibrating a vehicle stability system of a vehicle.

According to a first aspect of the present disclosure, a method for calibrating a vehicle stability system of a vehicle is provided. The method comprises acquiring vehicle model data of the vehicle. The method further comprises acquiring braking system data of a braking system of the vehicle. The method further comprises using a generative neural network model to generate parameters for calibrating the vehicle stability system based on the vehicle model data and the braking system data.

According to a second aspect of the present disclosure, an apparatus for calibrating a vehicle stability system of a vehicle is provided. The apparatus comprises a first acquisition unit configured to acquire vehicle model data of the vehicle. The apparatus further comprises a second acquisition unit configured to acquire braking system data of a braking system of the vehicle. The apparatus further comprises a parameter generation unit configured to use a generative neural network model to generate parameters for calibrating the vehicle stability system based on the vehicle model data and the braking system data.

According to a third aspect of the present disclosure, a controller is provided. The controller comprises at least one processor; and a memory coupled to the at least one processor and having instructions stored thereon that, when executed by the at least one processor, cause the controller to implement the method according to the first aspect of the present disclosure.

According to a fourth aspect of the present disclosure, a vehicle is provided. The vehicle comprises a controller according to the third aspect of the present disclosure.

According to a fifth aspect of the present disclosure, a computer program product is provided. The computer program product has computer-executable instructions stored thereon, wherein the computer-executable instructions are executed by a processor to implement the method according to the first aspect of the present disclosure.

**In** a sixth aspect of the present disclosure, a computer-readable storage medium is provided. The computer-readable storage medium has computer-executable instructions stored thereon, wherein the computer-executable instructions are executed by a processor to implement the method according to the first aspect of the present disclosure.

### Brief Description of the Drawings

The exemplary examples of the present disclosure will be described in further detail in conjunction with accompanying drawings in order to further clarify the above-mentioned and other objectives, features, and advantages of the present disclosure, wherein in the exemplary examples of the present disclosure, the same reference number typically represents the same part.
FIG. 1 illustrates a schematic diagram of an exemplary environment in which the device and/or method according to examples of the present disclosure may be implemented.
FIG. 2 illustrates a flowchart of a method for calibrating a vehicle stability system of a vehicle according to examples of the present disclosure.
FIG. 3 illustrates a flowchart of a process for generating parameters according to examples of the present disclosure.
FIG. 4 illustrates a flowchart of a process for selecting parameters according to examples of the present disclosure.
FIG. 5 illustrates a schematic diagram of a process for generating parameters using a generative neural network model corresponding to the process of FIG. 4 according to examples of the present disclosure.
FIG. 6 illustrates a flowchart of a process for selecting parameters according to another example of the present disclosure.
FIG. 7 illustrates a flowchart of a process for training a generative neural network model according to examples of the present disclosure.
FIG. 8 illustrates a schematic block diagram of an apparatus for calibrating a vehicle stability system of a vehicle according to examples of the present disclosure.
FIG. 9 illustrates a schematic block diagram of one example of an exemplary device according to one example that is suitable to embody the content of the present disclosure.

**In** the various accompanying drawings, the same or corresponding numbers represent the same or corresponding portions.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as openended inclusion, that is, "comprising but not limited to." The term "based on" should be understood as "at least partially based on." The term "one example" or "this example" should be understood as "at least one example." The terms "first," "second," etc. may refer to different objects or the same object. Other explicit and implicit definitions may be included below. As previously noted, due to the large number of parameters of the vehicle stability system, highly experienced engineers are often required to perform this calibration or recalibration. Typically, after engineers adjust at least some of the parameters of the vehicle stability system, live vehicle testing is required. During live vehicle testing, the vehicle stability system of the vehicle is calibrated using the currently adjusted set of parameters. The vehicle is then driven in as many different environments as possible to acquire test data under as many operating conditions as possible (e.g., more than 150 operating conditions). Test data comprises, e.g., curves (also called traces) of driving data such as speed, distance, and acceleration. Engineers then analyze the shape of these curves, adjust one or more of the current parameters again based on the analysis results, and again perform the live vehicle testing described above. The above process is repeated until all curves acquired through live vehicle testing meet the engineers' requirements. Therefore, the above method of calibrating (or adjusting) the vehicle stability system requires a great deal of labor, time, vehicle wear and tear, site, or extreme test environment-related costs and relies heavily on the engineers' experience, resulting in large differences in calibration between different engineers and making it difficult to ensure calibration accuracy.

To address at least the above and other potential problems, examples of the present disclosure provide a method of calibrating a vehicle stability system of a vehicle. The method comprises acquiring vehicle model data of the vehicle. The method further comprises acquiring braking system data of a braking system of the vehicle. The method further comprises using a generative neural network model to generate parameters for calibrating the vehicle stability system based on the vehicle model data and the braking system data. The method according to examples of the present disclosure can use a generative neural network model based on vehicle-related data to efficiently and automatically generate parameters for calibrating the vehicle stability system of the vehicle, thereby improving the accuracy and efficiency of calibrating the vehicle stability system of the vehicle and reducing the cost of calibrating the vehicle stability system.

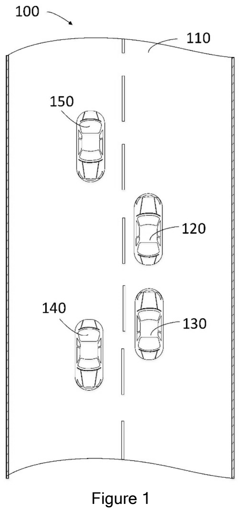

Below, examples of the present disclosure will be described in detail with reference to the accompanying drawings. FIG. 1 illustrates a schematic diagram of an exemplary environment 100 in which the device and/or method according to examples of the present disclosure may be implemented. The example environment 100 of FIG. 1 shows a road 110 and vehicles 120, 130, 140, and 150 traveling on the road. Any of the vehicles 120, 130, 140, and 150 may have a vehicle stability system, such as an electronic stability program (ESP). In the following, for ease of illustration, the vehicle 120 is described as an example, but it should be understood that the following description applies equally to the vehicles 130, 140, and 150 as well as to any other vehicle.

For example, when the vehicle 120 is traveling on a road with heavy traffic, an icy road, a road with rain or snow, etc., the vehicle 120 may frequently use the braking system and may encounter a critical situation, thereby triggering the vehicle stability system to control the braking system to prevent the vehicle from locking, skidding, etc. Accordingly, there is a need for an accurate calibration of the vehicle stability system of the vehicle 120 to ensure the safety of the vehicle 120.

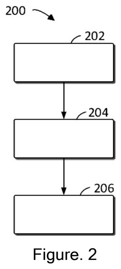

Examples of the present disclosure are capable of efficiently, automatically, cost-effectively, and accurately calibrating a vehicle stability system of a vehicle to ensure vehicle safety. A method for calibrating a vehicle stability system of a vehicle according to the present disclosure will be described below with reference to the examples of FIGS. 2-7. FIG. 2 illustrates a flowchart of a method 200 for calibrating a vehicle stability system of a vehicle according to examples of the present disclosure. The method of FIG. 2 may be performed by a controller (e.g., ADAS) in the vehicle 120 (or any other vehicle) shown in FIG. 1 or any other controller, electronic device, or server in communication with the vehicle 120 (or any other vehicle).

As shown in FIG. 2, at block 202, vehicle model data of the vehicle is acquired. **In** some examples, the vehicle model data may comprise physical parameters of the vehicle body, such as the length, width, height, and weight of the vehicle and the sizes of related components (such as tires etc.). In some examples, the vehicle model data may also comprise vehicle type data. In some examples, the type data may comprise the type of the vehicle. In other examples, the type data may comprise cluster types under the type of vehicle (described further in the examples below).

At block 204, the braking system data of the braking system of the vehicle is acquired. In some examples, the braking system data may be performance parameters (indicating the braking capability of the braking system) of relevant components of the vehicle's braking system (e.g., tires, wheel cylinders, vehicle body, brake pedals, etc.), such as wheel speed range, wheel acceleration range, wheel cylinder pressure range, vehicle body pitch angle range, vehicle body steering angle range, vehicle braking distance range, etc. In some examples, two or more items of braking system data may be correlated with each other, e.g., a wheel speed range and a wheel cylinder pressure range may be correlated with each other, but this is not limited thereto. At block 206, a generative neural network model is used to generate parameters for calibrating the vehicle stability system based on the vehicle model data and the braking system data.

In some examples, the generative neural network model may be a trained generative neural network model (the training process of which will be further described in the examples below). The trained generative neural network model can efficiently and automatically generate parameters for calibrating the vehicle stability system based solely on the vehicle's hardware parameters (the above vehicle model data) and related software parameters (the above braking system data), thereby improving the accuracy and efficiency of parameter generation and saving a great deal of labor, time, vehicle wear and tear, site, and other costs.

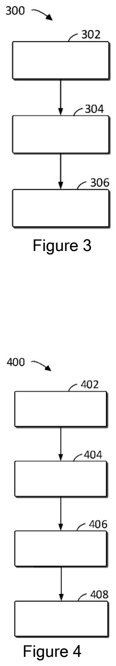

The method according to examples of the present disclosure can use a generative neural network model based on vehicle-related data to efficiently and automatically generate parameters for calibrating the vehicle stability system of the vehicle, thereby improving the accuracy and efficiency of calibrating the vehicle stability system of the vehicle and reducing the cost of calibrating the vehicle stability system. Examples of using a generative neural network model to generate parameters for calibrating a vehicle stability system are described below with reference to FIGS. 3-7.

FIG. 3 illustrates a flowchart of a process 300 for generating parameters according to examples of the present disclosure. The process 300 of FIG. 3 corresponds to block 206 in FIG. 2. As shown in FIG. 3, at block 302, a generative neural network model may be used to generate a plurality of sets of parameters based on the vehicle model data acquired at block 202 of FIG. 2 and braking system data acquired at block 204 of FIG. 2. In some examples, each set of parameters in the plurality of sets of parameters may comprise a plurality of parameters, and the plurality of parameters may be a plurality of categories of parameters for calibrating the vehicle stability system, e.g., parameters related to anti-skid, parameters related to anti-lock braking, etc., so that each set of parameters forms a parameter combination, and the plurality of sets of parameters provide a variety of options for parameter combinations.

At block 304, at least one set of parameters that satisfy parameter constraints can be selected from among the plurality of sets of parameters. In some examples, the parameter constraints may comprises individual constraints on at least one parameter among the plurality of parameters in each set of parameters, and/or the parameter constraints may comprise mutual constraints on at least two parameters among the plurality of parameters in each set of parameters. In some examples, individual constraints can be used to limit the value range of individual parameters etc. In some examples, mutual constraints can be used to define mutual constraints between parameters. For example, they can be used to define the value range of the sum, difference, or ratio of two or more parameters. As such, the various sets of parameters that do not meet the calibration requirements can be filtered out so that the calibration of the vehicle stability system is more accurate, thereby ensuring the safety of the vehicle.

At block 306, a set of parameters may be selected from the at least one set of parameters above as parameters for calibration of the vehicle stability system according to redetermined filtering conditions. In some examples, the predetermined filtering conditions may be conditions related to similarity (which will be described in detail in the example of FIG. 4). In other examples, the predetermined filtering conditions may be user selections input by a user, where the user is, e.g., a manufacturer or purchaser (e.g., their engineer) of a product corresponding to the method or apparatus of the present application. An example of selecting the above set of parameters will be described further below with reference to FIGS. 4-6.

It should be understood that where only one set of parameters is selected at block 304, only that set of parameters can be selected at block 306 as the parameters for calibration of the vehicle stability system without judging the above predetermined filtering conditions; or only that set of parameters is provided to the user in block 306 as a candidate option so that the user can only select this set of parameters as the parameters for calibration of the vehicle stability system without filtering according to the above predetermined filtering conditions. Further, where two or more sets of parameters are selected at block 304, a set of parameters may be selected at block 306 as the parameters for calibration of the vehicle stability system with reference to the example shown in FIGS. 4-6 below.

FIG. 4 illustrates a flowchart of a process 400 for selecting parameters according to examples of the present disclosure. The process 400 of FIG. 4 may correspond to one example of block 306 of FIG. 3. As shown in FIG. 4, at block 402, at least one set of theoretical driving data curves for the vehicle (e.g., theoretical curves of driving data such as speed, distance, and acceleration (but not limited to these) with respect to time) can be acquired based on at least one set of parameters selected at block 304 of FIG. 3. In some examples, the theoretical driving data curve may represent an expected driving data curve of the vehicle stability system for a corresponding set of parameters. For example, for each set of parameters, a set of theoretical driving data curves may be acquired under different simulated operating conditions by simulating the driving of a vehicle in different environments using a first simulator. It should be understood that any first simulator capable of achieving the above functions may be used to generate theoretical driving data curves.

At block 404, each set of parameters of the at least one set of parameters selected at block 304 of FIG. 3 is used to calibrate the vehicle stability system to acquire at least one set of actual driving data curves (e.g., actual curves of driving parameters such as speed, distance, acceleration (but not limited to these) with respect to time) for an actual driving process of the vehicle. In other words, at block 404, each set of parameters of the at least one set of parameters may be used to perform the live vehicle testing described above, thereby acquiring each set of actual driving data curves corresponding to each set of parameters. It is to be noted that the order of steps 402 and 404 is not limited here, and the two steps can also be performed simultaneously.

At block 406, a similarity between each theoretical driving data curve of the at least one set of theoretical driving data curves acquired at block 402 and a corresponding set of actual driving data curves of the at least one set of actual driving data curves acquired at block 404 may be determined. In some examples, the similarity may indicate the similarity in shape between the theoretical driving data curve and the actual driving data curve. Therefore, in the process of determining the similarity, possible differences between the theoretical driving data curve and the actual driving data curve that may have a smaller impact on the shape, such as translation, may not be considered. In some examples, a second simulator (e.g., Calimaster) different from the first simulator may be used to determine the similarity, and the similarity may be quantified using a similarity score.

At block 408, a set of parameters corresponding to the highest similarity may be selected from the at least one set of parameters selected at block 304 of FIG. 3 as the parameters for calibration of the vehicle stability system. In some examples, a set of parameters corresponding to the highest similarity score determined by the second simulator in the above example can be selected as the parameters. Here, a specific set of parameters corresponds to a specific driving data curve (i.e., there is a corresponding relationship between the two), and the driving data curve may represent the performance of the vehicle's braking system. Therefore, by detecting the similarity in shape between the acquired theoretical driving data curve and the actual driving curve, it can be determined whether the generated corresponding set of parameters meets the requirements (or the direction in which the parameters in the set of parameters need to be adjusted can be determined). As a result, the workload of live vehicle testing can be greatly reduced and the efficiency of generating parameters for calibrating the vehicle stability system can be improved.

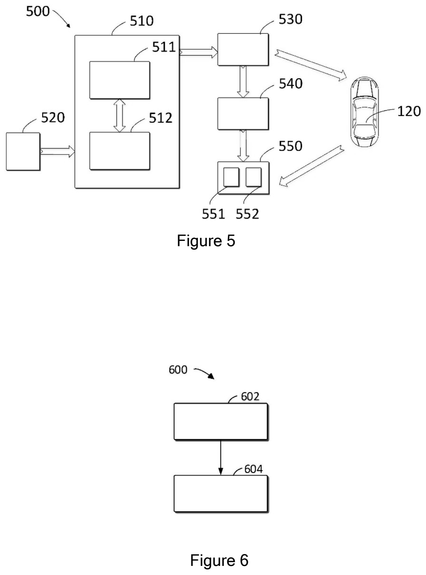

FIG. 5 illustrates a schematic diagram of a process 500 for generating parameters using a generative neural network model corresponding to the process 400 of FIG. 4 according to examples of the present disclosure. As shown in FIG. 5, in some examples, the generative neural network model 510 may comprise a generator model 511 and a discriminator model 512. The generative neural network model 510 may be a trained generative neural network model that may be trained such that: the generator model 511 can generate corresponding parameters based on the vehicle model data and braking system data as input (e.g., by generating corresponding parameters by constructing a vehicle dynamics model based on the vehicle model data and braking system data) and the discriminator model 512 can verify the authenticity of the generated parameters so that the generative neural network model 510 outputs parameters with authenticity greater than a predetermined authenticity threshold.

In some examples, the generative neural network model 510 may be a generative adversarial network (GAN). In other examples, the generative neural network model 510 may be a conditional tabular generative adversarial network (CTGAN). In still other examples, the generative neural network model 510 may be a diffusion model. It should be understood that the above are merely examples of the generative neural network model 510, and any other generative neural network model may be selected according to actual needs.

As shown in FIG. 5, the generative neural network model 510 may receive input data 520, such as vehicle model data and braking system data. The generative neural network model 510 may generate a plurality of sets of parameters based on the input data 520 (block 302 of FIG. 3). The plurality of sets of parameters may be input into a first selection module 530 to select at least one set of parameters from the plurality of sets of parameters that satisfy the parameter constraints (block 304 of FIG. 3). The at least one set of parameters selected by the first selection module 530 may be input into a driving curve acquisition module 540 (e.g., the first simulator in the above example) to acquire at least one set of theoretical driving data curves for the vehicle (block 402 of FIG. 4).

Further, the at least one set of parameters selected by the first selection module 530 may also be calibrated to the vehicle stability system of the vehicle 120 to acquire at least one set of actual driving data curves for the actual driving process of the vehicle 120 (block 404 of FIG. 4). A first module 551 in a second selection unit 550 (e.g., the second simulator in the above example) may determine the similarity between each set of theoretical driving data curves of the at least one set of theoretical driving data curves and a corresponding set of actual driving data curves of the at least one set of actual driving data curves (block 406 of FIG. 4). A second module 552 in the second selection unit 550 may select a set of parameters corresponding to the highest similarity from the at least one set of parameters selected by the first selection module 530 as the parameters for calibration of the vehicle stability system (block 408 of FIG. 4).

Through the process shown in FIGS. 4 and 5 above, only a relatively small number of live vehicle tests may be performed to ensure that the final set of parameters selected is closest to the expected parameters of the vehicle stability system, thereby further improving the accuracy of the calibration of the vehicle stability system and the efficiency of parameter determination and further improving vehicle safety.

Reference is made to FIG. 6 below to describe another example of selecting a set of parameters as parameters from the at least one set of parameters selected at block 306 of FIG. 3. FIG. 6 illustrates a flowchart of a process 600 for selecting parameters according to another example of the present disclosure. The process 600 of FIG. 6 may correspond to block 306 of FIG. 3. As shown in FIG. 6, at block 602, a first input of a user may be received to select at least one set of parameters selected at block 304 of FIG. 3. In some examples, e.g., the at least one set of parameters may be provided to the user visually, aurally, or the like, and the first input of the user may be received through any input interface (e.g., a keyboard, a touch screen, a microphone, etc.).

At block 604, a set of parameters may be selected from the at least one set of parameters according to the first input of the user as parameters for calibration of the ESP. As such, the vehicle stability system of the vehicle may be further calibrated based on the preferences or experience of the user (e.g., the manufacturer or purchaser (e.g., their engineer) of a product corresponding to the method or apparatus of the present application). In other words, in this example, parameters with improved accuracy and security that are more suitable for user preferences can be generated as above. It should be understood that the process of FIG. 6 may also be implemented using the architecture shown in the process 500 of FIG. 5, except that the driving curve acquisition unit 540 and the second selection unit 550 of FIG. 5 may be replaced with a user interaction module for interacting with the user to make a selection based on the first input of the user.

Further, after selecting a set of parameters through the process 400 of FIG. 4 or the process 600 of FIG. 6 as described above, the set of parameters may be further customized to make the set of parameters more consistent with the user's preferences. To this end, in some examples, the method 200 according to the present disclosure may further comprise: receiving a second input of the user (e.g., the manufacturer or purchaser (e.g., their engineer)) to modify one or more parameters of the set of parameters selected at block 408 of FIG. 4 or at block 604 of FIG. 6. For example, the set of parameters may be provided to the user visually, aurally, or the like, and the second input of the user may be received using an input interface that is the same as or different from the input interface used to receive the first input of the user. The user is, e.g., a manufacturer or purchaser (e.g., their engineer) of a product corresponding to the method or apparatus of the present application.

**In** some examples, the method according to the present disclosure may further comprise: modifying one or more parameters according to the second input of the user to acquire a modified set of parameters. In some examples, the method according to the present disclosure may further comprise: using the modified set of parameters as parameters for calibrating the vehicle stability system. **In** this way, the vehicle stability system can be further customized so that the calibrated vehicle stability system is more in line with the user's usage habits, thereby further improving the safety of the user's use of the vehicle.

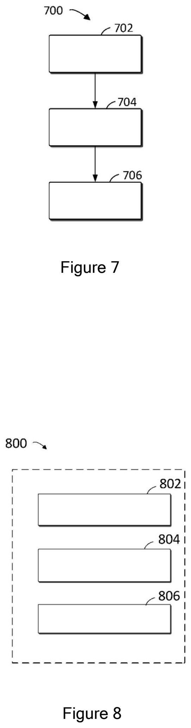

**In** addition, in some examples, in order to acquire the generative neural network model described above with reference to FIGS. 2-6, the method 200 according to examples of the present disclosure may also comprise a process of training the generative neural network model. FIG. 7 illustrates a flowchart of a process 700 for training a generative neural network model according to examples of the present disclosure. As shown in FIG. 7, at block 702, based on the vehicle model data of the vehicle 120, a plurality of historical driving data curves of other vehicles with the same characteristics as the vehicle 120 and braking system data of the other vehicles can be acquired (for example, from a historical driving database of vehicles of existing models). The vehicle model data may be the same vehicle model data as the vehicle model data acquired at block 202 of FIG. 2, i.e., the vehicle model data may comprise body physical parameters of the vehicle 120 and type data of the vehicle 120.

In some examples, the type data may comprise the type of the vehicle 120. In other examples, the type data may comprise cluster types under the type of the vehicle 120. In this case, in some examples, the same features may be the same type. In other examples, the same features may be the same cluster type. In some examples, when the type data comprises cluster types under the type of the vehicle 120 and the same features are the same cluster types, the method 200 may further comprise: clustering the vehicle model data and braking system data of multiple vehicles under each type to acquire at least one cluster type for each type. For example, for the vehicle model data and braking system data under each type, the vehicle model data and the corresponding braking system data may be clustered into predetermined cluster types according to the degree of difference between each piece of vehicle model data and the corresponding braking system data. For example, in each cluster type, the difference between each piece of vehicle type data is within a first predetermined difference range and the difference between each piece of braking system data is within a second predetermined difference range. For example, the number of acquired cluster types can be set according to actual needs. For example, several, more than ten, or dozens of cluster types can be acquired.

In some examples, the plurality of historical driving data curves may be the actual driving data curves of the other vehicles traveling under different historical parameters of the vehicle stability systems of the other vehicles and under different operating conditions. In some examples, each of the plurality of historical driving data curves may have a corresponding score that may indicate a difference between each historical driving data curve and the expected driving data curve.

At block 704, a predetermined number of historical driving data curves that satisfy predetermined conditions may be selected from the plurality of historical driving data curves as annotated data. In some examples, a predetermined number of historical driving data curves with scores greater than a predetermined score threshold may be selected from a plurality of historical driving data curves as annotated data. It should be understood that the predetermined score threshold and the predetermined number may be calibrated according to actual needs.
At block 706, the generative neural network model may be trained using the vehicle model data of other vehicles, braking system data of other vehicles, and annotated data. For example, during the training process, vehicle model data of other vehicles and braking system data of other vehicles can be input into the generative neural network model as input data, and the output data output by the generative neural network model can be the parameters of the ESP system. The output parameters can be used to acquire a corresponding driving data curve (e.g., a theoretical driving data curve or an actual driving data curve for other vehicles acquired in a manner similar to the above), and the driving data curve can be compared with the corresponding annotated data to adjust the model parameters of the generative neural network model (e.g., the related functions of its generator model and discriminator model) according to the comparison result (e.g., the difference between the corresponding driving data curve and the annotated data). Here, when determining the difference between the driving data curve and the corresponding annotated data, only the shape difference between the curves may be considered, without considering differences such as translation that have a smaller impact on the shape.
In some examples, the above training may cause: the generator model of the generative neural network model to generate corresponding parameters based on the vehicle model data and braking system data as input and the discriminator model of the generative neural network model to discriminate the authenticity of the generated parameters so that the generative neural network model outputs parameters with an authenticity greater than a predetermined authenticity threshold. It should be understood that the predetermined authenticity threshold may vary according to actual needs and the actual generative neural network model used. In some examples, the above training may further cause: the difference between the driving data curve corresponding to the parameters output by the generative neural network model and the corresponding annotated data to be within a predetermined difference range. It should be understood that the predetermined difference range may be calibrated differently according to actual needs.

Because a large number of historical driving data curves have been accumulated for various types of existing vehicles, during the training process, a large amount of comprehensive training data under various operating conditions can be easily acquired, thereby efficiently training the generative neural network model and enabling the trained generative neural network model to have higher accuracy.

FIG. 8 illustrates a schematic block diagram of an apparatus 800 for calibrating a vehicle stability system of a vehicle according to examples of the present disclosure. As shown in FIG. 8, the apparatus 800 comprises a first acquisition unit 810 configured to acquire vehicle model data of the vehicle. The apparatus 800 further comprises a second acquisition unit 820 configured to acquire braking system data of a braking system of the vehicle. The apparatus 800 further comprises a parameter generation unit 830 configured to use a generative neural network model to generate parameters for calibrating the vehicle stability system based on the vehicle model data and the braking system data.

In some examples, the parameter generation unit 830 may also be configured to use the generative neural network model to generate a plurality of sets of parameters based on the vehicle model data and the braking system data, each set of parameters comprising a plurality of parameters. In some examples, the parameter generation unit 830 may further be configured to select at least one set of parameters from the plurality of sets of parameters that satisfy the parameter constraints. In some examples, the parameter constraints may comprise individual constraints on at least one parameter of the plurality of parameters and/or mutual constraints on at least two parameters of the plurality of parameters. In some examples, the parameter generation unit 830 may be further configured to select a set of parameters from at least one set of parameters as parameters according to predetermined filtering conditions.

In some examples, the parameter generation unit 830 may be further configured to acquire at least one set of theoretical driving data curves for the vehicle based on at least one set of parameters. In some examples, the parameter generation unit 830 may be further configured to calibrate the vehicle stability system using each set of parameters of at least one set of parameters to acquire at least one set of actual driving data curves for the actual driving process of the vehicle. In some examples, the parameter generation unit 830 may be further configured to determine a similarity between each set of theoretical driving data curves of at least one set of theoretical driving data curves and a corresponding set of actual driving data curves of at least one set of actual driving data curves. In some examples, the parameter generation unit 830 may be further configured to select a set of parameters corresponding to the highest similarity from at least one set of parameters as parameters.

In some examples, the parameter generation unit 830 may be further configured to receive a first input of a user for selecting at least one set of parameters. In some examples, the parameter generation unit 830 may be further configured to select a set of parameters from at least one set of parameters as parameters based on the first input of the user.

In some examples, the apparatus 800 may further comprise a modification unit. The modification unit may be configured to receive a second input of a user for modifying one or more parameters selected from a set of parameters. In some examples, the modification unit may be further configured to receive a second input of a user for modifying one or more parameters selected from a set of parameters. In some examples, the modification unit may be further configured to modify one or more parameters based on the second input of the user to acquire a modified set of parameters. In some examples, the modification unit may be further configured to use the modified set of parameters as parameters.

In some examples, the apparatus 800 may further comprise a training unit. The training unit may be configured to acquire a plurality of historical driving data curves of other vehicles with the same features as the vehicle and braking system data of other vehicles based on the vehicle model data. In some examples, the vehicle model data may comprise physical parameters of the vehicle body. In some examples, the vehicle model data may also comprise vehicle type data. In some examples, the type data may comprise the type of the vehicle. In some examples, the type data may comprise cluster types under the type of the vehicle. In some examples, the same features mentioned above may be the same type. In other examples, the same features may be the same cluster type. In some examples, where the type data comprises cluster types under the type of the vehicle and the same features are the same cluster types, the apparatus 800 may further comprise a clustering unit. The clustering unit may be configured to cluster the vehicle model data and braking system data of a plurality of vehicles under each type to acquire at least one cluster type for each type.

In some examples, the plurality of historical driving data curves may be actual driving data curves of other vehicles traveling under different historical parameters of the vehicle stability systems of the other vehicles and under different operating conditions (e.g., the driving data of the vehicle is collected through speed sensors, distance sensors, acceleration sensors, etc. and the actual driving data curves are acquired through a time series model). In some examples, each historical drive curve of the plurality of historical driving data curves may have a corresponding score. In some examples, the score may indicate a difference between each historical driving data curve and the expected driving data curve.

In some examples, the training unit may be further configured to select a predetermined number of historical driving data curves that satisfy predetermined conditions from a plurality of historical driving data curves as annotated data. In some examples, the training unit may be further configured to select a predetermined number of historical driving data curves with scores greater than a predetermined score threshold from a plurality of historical driving data curves as annotated data. In some examples, the training unit may be further configured to use vehicle model data of other vehicles, braking system data of other vehicles, and annotated data to train the generative neural network model.

In some examples, the training of the training unit may cause: the generator model to generate corresponding parameters based on the vehicle model data and braking system data as input and the discriminator model to verify the authenticity of the generated parameters so that the generative neural network model outputs parameters with an authenticity greater than a predetermined authenticity threshold. In some examples, the training of the training unit may further cause: the difference between the driving data curve corresponding to the parameters output by the generative neural network model and the corresponding annotated data to be within a predetermined difference range.

The apparatus 800 according to examples of the present disclosure can use a generative neural network model based on vehicle-related data to efficiently generate parameters for calibrating the vehicle stability system of the vehicle, thereby improving the accuracy and efficiency of calibrating the vehicle stability system of the vehicle and reducing the cost of calibrating the vehicle stability system. The method and apparatus for calibrating a vehicle stability system of a vehicle provided in accordance with examples of the present invention can generate calibration parameters for ESP systems for different vehicle models, different scenarios, and different operating conditions, thereby achieving expansion of the calibration parameters. For new vehicles or extreme test scenarios, parameters for calibrating the vehicle stability system of the vehicle can also be efficiently generated.

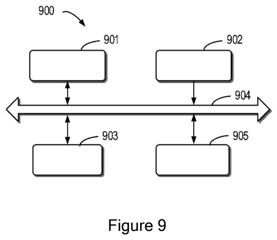

FIG. 9 illustrates a schematic block diagram of an exemplary device 900 suitable for implementing the examples of the present disclosure. The above-mentioned controller can be implemented using the device 900. As shown in the figure, the device 900 comprises a processor 901, which can perform various appropriate actions and processes according to computer program instructions stored in a read only memory (ROM) 902 and loaded into a random access memory (RAM) 903. Various programs and data required for the operation of the device 900 may also be stored in the RAM 903. The processor 901, the ROM 902, and the RAM 903 are interconnected through a bus 904. An input/output (I/O) interface 905 is also connected to the bus 904.

The various processes and processing described above, such as the method 200 and processes 300 to 700, can be executed by the processor 901. For example, in some examples, the method 200 and processes 300 to 700 can be implemented as a computer software program tangibly contained in a machine-readable medium. In some examples, part or all of the computer programs may be loaded and/or installed onto the device 900 through the ROM 902. When the computer program is loaded onto the RAM 903 and executed by the processor 901, one or more actions of the method 200 and processes 300 to 700 described above may be performed.

The present disclosure may be a method, apparatus, system, and/or computer program product. The computer program product may comprise a computer-readable storage medium uploaded with computer-readable program instructions for performing various aspects of the present disclosure.

The computer-readable storage medium may be a tangible device that maintains and stores instructions used by instruction execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: a portable computer disk, a hard disk, a random access memory (RAM), a read-only memory (ROM), an erasable programmable read-only memory (EPROM or flash), a static random access memory (SRAM), a portable compact disc read-only memory (CD-ROM), a digital versatile disc (DVD), a memory stick, a floppy disk, a mechanical encoding device such as a punch card or raised structures in grooves having instructions stored thereon, and any suitable combinations of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein can be downloaded to respective computing/processing devices from a computer-readable storage medium or to an external computer or external storage device via a network, for example, the Internet, a local area network, a wide area network, and/or a wireless network. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in the computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. In the case of remote computers, the remote computer can be connected to the user's computer through any type of network - such as a local area network (LAN) or a wide area network (WAN) - or can be connected to an external computer (for example, through the Internet using an Internet Service Provider). In some examples, the state information of computer-readable program instructions is used to personalize custom electronic circuits, such as a programmable logic circuit, field-programmable gate array (FPGA), or programmable logic array (PLA), wherein the electronic circuit is able to execute computer-readable program instructions, thereby achieving the various aspects of the present disclosure.

## Claims

1. A method (200) for calibrating a vehicle stability system of a vehicle, comprising:
acquiring (202) vehicle model data of the vehicle;
acquiring (204) braking system data of a braking system of the vehicle; and
generating (206) parameters for calibrating the vehicle stability system based on the vehicle model data and the braking system data using a generative neural network model.

2. The method according to Claim 1, wherein generating (206) parameters for calibrating the vehicle stability system based on the vehicle model data and the braking system data using the generative neural network model comprises:
generating (302) a plurality of sets of parameters based on the vehicle model data and the braking system data using the generative neural network model, each set of parameters comprising a plurality of parameters;
selecting (304) at least one set of parameters that satisfies parameter constraints from the plurality of sets of parameters, the parameter constraints comprising: individual constraints on at least one parameter of the plurality of parameters and/or mutual constraints on at least two parameters of the plurality of parameters;
selecting (306) a set of parameters from the at least one set of parameters as parameters for calibrating the vehicle stability system according to predetermined filtering conditions.

3. The method according to Claim 2, wherein selecting (306) a set of parameters from the at least one set of parameters as parameters according to predetermined filtering conditions comprises:
acquiring (402) at least one set of theoretical driving data curves for the vehicle based on the at least one set of parameters;
using each set of parameters of the at least one set of parameters to calibrate the vehicle stability system to acquire (404) at least one set of actual driving data curves for an actual driving process of the vehicle;
determining (406) a similarity between each set of theoretical driving data curves of the at least one set of theoretical driving data curves and a corresponding set of actual driving data curves of the at least one set of actual driving data curves; and
selecting (408) a set of parameters corresponding to the highest similarity from the at least one set of parameters as the parameters.

4. The method according to Claim 2, wherein selecting (306) a set of parameters from the at least one set of parameters as parameters according to predetermined filtering conditions comprises:
receiving a first input (602) of a user to select the at least one set of parameters; and
selecting (604) a set of parameters from the at least one set of parameters as parameters based on the first input of the user.

5. The method according to Claim 3 or 4, further comprising:
receiving a second input of a user for modifying one or more parameters selected from the set of parameters;
modifying the one or more parameters according to the second input of the user to acquire the modified set of parameters; and
using the modified set of parameters as the parameters.

6. The method according to Claim 1, further comprising:
acquiring (702) a plurality of historical driving data curves of other vehicles with the same characteristics as the vehicle and braking system data of the other vehicles based on the vehicle model data;
selecting (704) a predetermined number of historical driving data curves that satisfy predetermined conditions from the plurality of historical driving data curves as annotated data; and
training (706) the generative neural network model using the vehicle model data of the other vehicles, the braking system data of the other vehicles, and the annotated data.

7. The method according to Claim 6, wherein the plurality of historical driving data curves are actual driving data curves of the other vehicles under different historical parameters of the vehicle stability systems of the other vehicles and under different operating conditions, and each of the plurality of historical driving data curves has a corresponding score indicating a difference between the each historical driving data curve and an expected driving data curve, and
wherein selecting (704) a predetermined number of historical driving data curves that satisfy predetermined conditions from the plurality of historical driving data curves as annotated data comprises:
selecting the predetermined number of historical driving data curves with scores greater than a predetermined score threshold from the multiple historical driving data curves as the annotated data.

8. The method according to Claim 7, wherein the generative neural network model comprises a generator model and a discriminator model, and
wherein the training (706) causes: the generator model to generate corresponding parameters based on the vehicle model data and braking system data as input and the discriminator model to verify the authenticity of the generated parameters so that the generative neural network model outputs parameters with an authenticity greater than a predetermined authenticity threshold, and
the training further causes: the difference between the driving data curve corresponding to the parameters output by the generative neural network model and the corresponding annotated data to be within a predetermined difference range.

9. The method according to any one of Claims 6-8, wherein the vehicle model data comprises physical parameters of the vehicle body and type data of the vehicle,
wherein the type data comprises at least one of: the type of the vehicle or a cluster type under the type,
wherein the same features are the same type or the same cluster type, and
wherein when the type data comprises a cluster type under the type of the vehicle and the same features are the same cluster type, the method further comprises: clustering the vehicle model data and braking system data of multiple vehicles under each type to acquire at least one cluster type for each type.

10. An apparatus (800) for calibrating a vehicle stability system of a vehicle, comprising:
a first acquisition unit (802) configured to acquire vehicle model data of the vehicle;
a second acquisition unit (804) configured to acquire braking system data of a braking system of the vehicle;
a parameter generation unit (806) configured to use a generative neural network model to generate parameters for calibrating the vehicle stability system based on the vehicle model data and the braking system data.

11. A controller, comprising:
at least one processor, and
a memory, coupled to the at least one processor and having instructions stored thereon, wherein the instructions, when executed by the at least one processor, cause the controller to perform the method according to any one of Claims 1-9.

12. A vehicle, comprising the controller according to Claim 11.

13. A computer program product, comprising computer-executable instructions, wherein the computer-executable instructions are executed by a processor to implement the method according to any one of Claims 1-9.
